# EUROPÄISCHE PATENTSCHRIFT

(11) **EP 2 298 711 B1**
(45) Veröffentlichungstag und Bekanntmachung des Hinweises auf die Patenterteilung: **15.03.2017**
(21) Anmeldenummer: 09170837.0
(22) Anmeldetag: 21.09.2009
(51) Int. Cl.: C04B 28/20

(54) **Zusammensetzung und Verfahren zur Herstellung von Kalksandstein**
Compound and method for producing sand-lime brick
Composition et procédé de fabrication de briques silico-calcaires

(43) Veröffentlichungstag der Anmeldung: 23.03.2011
(73) Patentinhaber: Sika Technology AG, 6340 Baar (CH)
(72) Erfinder: Blask, Oliver, 68723 Oftersheim (DE); Honert, Dieter, 69234 Dielheim (DE); Kern, Olaf, 67122 Altrip (DE)
(74) Vertreter: Sika Patent Attorneys

(56) Entgegenhaltungen:
- EP-B1- 1 138 697
- WO-A1-02/088241
- DE-A1- 2 439 244
- DE-A1-102005 053 019
- US-A1- 2003 073 760

## Beschreibung

### Technisches Gebiet

Die Erfindung betrifft das Gebiet der Herstellung von Kalksandstein.

### Stand der Technik

Es ist bekannt, aus einer Mischung von Kalk, Sand und Wasser sogenannte Kalksandsteine anzufertigen, die sich insbesondere beim Häuserbau bewährt und durchgesetzt haben. Diese Kalksandsteine zeichnen sich durch ihre hohe Dichte und demzufolge durch ihre hohe Wärmespeicherkapazität, hohe statische Festigkeit und gute Schallisolierung aus. Dabei wird das noch formbare Rohmaterial aus Sand, Kalk und Wasser mit hydraulischen Pressen unter grossem Druck zu Steinrohlingen gepresst und anschließend in Dampf-Härtekesseln bei einer Temperatur von 160°C bis 220°C unter Sattdampfdruck gehärtet. Dabei bringt die heiße Dampfatmosphäre chemische Prozesse innerhalb des Kalksandsteines in Gang, bei denen sich die Sandkörper fest miteinander verzahnen.

Nach dem gegenwärtigen Stand der Technik wird zur Erhöhung der Produktqualität der Kalksandsteine, namentlich der Prüfrohdichte und der Druckfestigkeit, der Pressdruck auf die Kalksandsteinrohlinge erhöht und/oder das Kornband der Gesteinskörnung optimiert und/oder Schwerzuschläge, typischerweise Basalt, zugegeben.

Eine Erhöhung des Pressdrucks führt jedoch zu einem erhöhten Verschleiß der Presswerkzeuge und einem erhöhten Energieaufwand. Die Optimierung des Kornbandes ist nur durch Zukauf und Transport geeigneter Sande möglich, was einen beträchtlichen wirtschaftlichen Nachteil darstellt, da die meisten Kalksandsteinhersteller hauseigene Sandgruben besitzen. Auch Schwerzuschläge wie Basalt haben den Nachteil, dass sie oft zugekauft werden müssen und teuer sind.

Weiter ist ab einer gewissen Höhe der Kalksandsteine der Pressdruck der hydraulischen Pressen nicht mehr ausreichend, um eine genügende Verdichtung in der Mitte des Steinrohlings zu erreichen, was sich negativ auf die Prüfrohdichte und die Druckfestigkeit des fertigen Kalksandsteins auswirkt.

Das Dokument DE 24 39 244 A1 beschreibt ein Verfahren zur Herstellung von Baustoffmischungen für Silikatbeton, unter Verwendung von Kalk, Quarzsand und Wasser, dadurch gekennzeichnet, dass eine Baustoffmischung aus Kalkhydrat, Zement und/oder Branntkalk, Anhydrit, Quarzsand und Wasser vorzugsweise folgender Zusammensetzung: 4,0-8,5% Kalkhydrat Ca(OH)₂, 1,5-4,5% Zement und/ oder Branntkalk CaO, 0,5-2,0% Anhydrit CaSO₄·0,5H₂O, 6,7-37,5% Quarzsand gemahlen mit einem SiO₂-Gehalt ≥ 90%, 47,5-87,3% Quarzsand 0-4 mm und 13,0-18,0% Wasser, durch die gleichzeitige Zuführung und Mischung aller Bestandteile in einem Mischprozess hergestellt wird, und dadurch gekennzeichnet, dass der Baustoffmischung plastifizierende Zusatzmittel zugegeben werden.

### Darstellung der Erfindung

Davon ausgehend liegt der vorliegenden Erfindung die Aufgabe zugrunde, einen Kalksandstein zu schaffen, der gegenüber dem Stand der Technik einen geringeren Energieaufwand bei dem Verpressen benötigt und eine höhere Produktqualität aufweist.

Überraschenderweise wurde nun gefunden, dass eine Zusammensetzung zur Herstellung von Kalksandstein umfassend Kalk, Sand, Wasser und mindestens ein Fliessmittel zur Erhöhung der Verarbeitbarkeit der Zusammensetzung im nicht ausgehärteten Zustand führt. Da Fliessmittel in der Bauindustrie typischerweise in zementartigen Zusammensetzungen mit einem Wasser-Gehalt von 35 - 60 Gewichts-% des Bindemittels eingesetzt werden, ist eine Verbesserung der Verarbeitbarkeit in Zusammensetzungen zur Herstellung von Kalksandstein mit einem Wasser-Gehalt von typischerweise lediglich 1 - 10 Gewichts-%, zeitweilig bis zu 25 Gewichts-%, überraschend.

Die erfindungsgemässe Zusammensetzung erlaubt das Erreichen von gewünschten Prüfrohdichten bei der Herstellung von Kalksandsteinen mit weniger Presszyklen, was sich vorteilhaft auf den Energiebedarf, die Produktionszeit und den Verschleiss der Presswerkzeuge auswirkt. Weiter erlaubt eine Verringerung der erforderlichen Presskraft eine Verwendung weniger leistungsstarker und dadurch kostengünstiger Pressmaschinen und Pressformen.

Weiter wurde überraschenderweise gefunden, dass durch die erhöhte Geschmeidigkeit der erfindungsgemässen Zusammensetzung eine erhöhte Passgenauigkeit und kompliziertere Formen der Pressrohlinge erreicht werden.

Weiter erlaubt die erfindungsgemässe Zusammensetzung eine Verringerung der eingesetzten Menge an Kalk, was zu einer Erhöhung der Druckfestigkeit und der Prüfrohdichte führt.

Unter dem Begriff "Prüfrohdichte" wird im vorliegenden Dokument die Dichte eines Kalksandsteinrohlings nach dem Pressen und der hydrothermischen Behandlung verstanden.

Es wurde weiter gefunden, dass selbst sehr grosse Formkörper aus erfindungsgemässen Zusammensetzungen im Vergleich zu herkömmlichen Zusammensetzungen nach dem Pressvorgang in der Mitte des Formkörpers eine höhere Verdichtung und somit eine höhere Druckfestigkeit aufweisen.

Weiter wurde überraschenderweise gefunden, dass die zusätzliche Verwendung eines Tensids die erforderlichen Presszyklen weiter verringert und sowie die Produktqualität der Kalksandsteine, namentlich die Prüfrohdichte und die Druckfestigkeit, weiter verbessert.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft eine Zusammensetzung zur Herstellung von Kalksandstein umfassend Kalk, Sand, Wasser und mindestens ein Fliessmittel, wobei es sich bei dem mindestens einen Fliessmittel um ein Kammpolymer KP mit über Ester- oder Ethergruppen an die Hauptkette angebunden Seitenketten handelt und wobei der Anteil an Wasser 0.485 - 10 Gewichts-%, bezogen auf das Gesamtgewicht der Zusammensetzung, beträgt.

Unter dem Begriff "Kalksandstein" werden im vorliegenden Dokument Formkörper verstanden, die aus einem Gemisch von Kalk und Sand durch Verdichtung, Formung und Aushärten unter Sattdampfdruck, typischerweise bei Temperaturen von 160 - 220°C (hydrothermische Härtung) für 4 - 12 Stunden hergestellt werden.

Unter dem Begriff "Kalk" wird im vorliegenden Dokument Calciumhydroxid (Kalkhydrat, Ca(OH)₂) verstanden, welches typischerweise durch die exotherme Reaktion von Calciumoxid (Branntkalk, CaO) mit Wasser erhalten wird.

Unter dem Begriff "Sand" werden im vorliegenden Dokument mineralische klastische Sedimente (klastische Gesteine), die lockere Anhäufungen (Lockersedimente) von abgerundeten oder eckigen, überwiegend 0,06 - 4 mm großen Körnchen darstellen, die bei der mechanischen und chemischen Verwitterung der Gesteine vom ursprünglichen Kornverband losgelöst und an ihren Ablagerungsort transportiert worden sind, verstanden, die einen Anteil an SiO₂ von mehr als 50 Gewichts-%, insbesondere mehr als 75 Gewichts-%, insbesondere bevorzugt mehr als 85 Gewichts-%, aufweisen.

Typischerweise handelt es sich bei geeignetem Sand um Quarzsande bestehend zu mehr als 85 Gewichts-%, insbesondere mehr als 90 Gewichts-%, aus Quarz.

Unter dem Begriff "Fliessmittel" werden im vorliegenden Dokument Zusatzmittel verstanden, die die Verarbeitbarkeit und Fliesseigenschaften von mineralischen Zusammensetzungen, insbesondere Zusammensetzungen zur Herstellung von Kalksandstein, verbessern oder den erforderlichen Wasser-Gehalt vermindern.

Geeignete Fliessmittel sind Fliessmittel, welche ausgewählt sind aus der Liste bestehend aus Ligninsulfonat, sulfoniertes Melaminformaldehydkondensat, sulfoniertes Naphthalinformaldehydkondensat und Kammpolymeren **KP** mit über Ester- oder Ethergruppen an die Hauptkette angebunden Seitenketten.

Bevorzugt handelt es sich bei dem mindestens einen Fliessmittel um ein Kammpolymer **KP** mit über Ester- oder Ethergruppen an die Hauptkette angebunden Seitenketten.

Ein Kammpolymer besteht aus einer linearen Polymerkette (=Hauptkette), an welcher über Ester- oder Ethergruppen Seitenketten angebunden sind. Die Seitenketten bilden hierbei bildlich gesprochen die "Zähne" eines "Kamms".

Als Kammpolymer **KP** geeignet sind einerseits Kammpolymere mit über Ethergruppen an das lineare Polymergerüst gebundenen Seitenketten.

Über Ethergruppen an das lineare Polymergerüst gebundene Seitenketten können durch Polymerisation von Vinylethern oder Allylethern eingeführt werden.

Derartige Kammpolymere sind beispielsweise in WO 2006/133933 A2 beschrieben, deren Inhalt hiermit insbesondere durch Bezugnahme eingeschlossen wird, offenbart sind. Die Vinylether oder Allylether weisen insbesondere die Formel (II) auf.

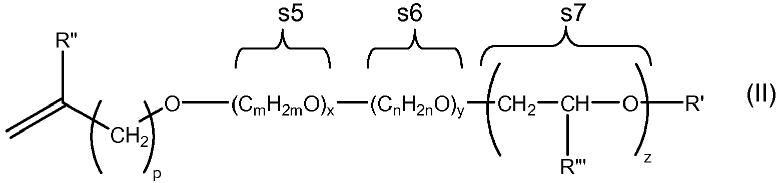

Hierbei steht R' für H oder für einen aliphatischen Kohlenwasserstoffrest mit 1 bis 20 C-Atomen oder einen cycloaliphatischen Kohlenwasserstoffrest mit 5 bis 8 C-Atomen oder ein, gegebenenfalls substituierter, Arylrest mit 6 bis 14 C-Atomen. R" steht für H oder für eine Methylgruppe und R'" steht für einen unsubstituierten oder substituierten Arylrest, insbesondere für einen Phenylrest.

Weiterhin stehen p für 0 oder 1; m und n unabhängig voneinander je für 2, 3 oder 4; und x und y und z unabhängig voneinander je für Werte aus dem Bereich von 0 bis 350.

Die Abfolge der in Formel (II) als s5, s6 und s7 bezeichneten Teilstrukturelemente kann hierbei alternierend, blockartig oder zufällig angeordnet sein.

Insbesondere sind derartige Kammpolymere Copolymerisate von Vinylether oder Allylether mit Maleinsäureanhydrid, Maleinsäure, und/oder (Meth)acrylsäure.

Als Kammpolymer **KP** geeignet sind andererseits Kammpolymere mit über Estergruppen an das lineare Polymergerüst gebundenen Seitenketten. Diese Art von Kammpolymeren **KP** ist gegenüber den Kammpolymeren mit über Ethergruppen an das lineare Polymergerüst gebundenen Seitenketten bevorzugt.

Besonders bevorzugte Kammpolymere **KP** sind Copolymere der Formel (I).

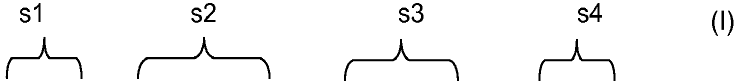

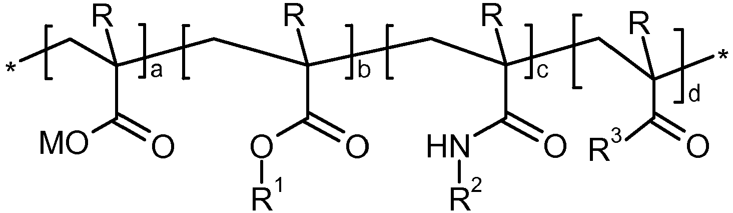

Hierbei stehen M unabhängig voneinander für H⁺, Alkalimetallion, Erdalkalimetallion, zwei- oder dreiwertiges Metallion, Ammoniumion, oder organische Ammoniumgruppe. Der Term "unabhängig voneinander" bedeutet im vorliegenden Dokument jeweils, dass ein Substituent unterschiedliche zur Verfügung stehenden Bedeutungen in demselben Molekül aufweisen kann. So kann beispielsweise das Copolymer der Formel (I) gleichzeitig Carbonsäuregruppen und Natriumcarboxylatgruppen aufweisen, das heisst, dass für M in diesem Falle H⁺ und Na⁺ unabhängig voneinander bedeuten.

Dem Fachmann ist klar, dass es sich einerseits um ein Carboxylat handelt, an welches das Ion M gebunden ist, und dass andererseits bei mehrwertigen Ionen M die Ladung durch Gegenionen ausgeglichen sein muss.

Weiterhin stehen die Substituenten R unabhängig voneinander für Wasserstoff oder für eine Methylgruppe.

Des Weiteren stehen die Substituenten R¹ unabhängig voneinander für -[AO]q-R⁴. Die Substituenten R² stehen unabhängig voneinander für eine C₁-bis C₂₀-Alkylgruppe, -Cycloalkylgruppe, -Alkylarylgruppe oder für -[AO]_{q}-R⁴. Der Substituent A steht in beiden Fälle unabhängig voneinander für eine C₂-bis C₄-Alkylengruppe und R⁴ für eine C₁- bis C₂₀-Alkylgruppe, -Cyclohexylgruppe oder -Alkylarylgruppe, während q einen Wert von 2 bis 250, insbesondere von 8 bis 200, besonders bevorzugt von 11 bis 150, darstellt.

Des Weiteren stehen die Substituenten R³ unabhängig voneinander für -NH₂, -NR⁵R⁶, -OR⁷NR⁸R⁹. Hierbei stehen R⁵ und R⁶ unabhängig voneinander für eine C₁- bis C₂₀-Alkylgruppe, -Cycloalkylgruppe oder -Alkylarylgruppe oder -Arylgruppe oder für eine Hydroxyalkylgruppe oder für eine Acetoxyethyl-(CH₃-CO-O-CH₂-CH₂-) oder eine Hydroxy-isopropyl- (HO-CH(CH₃)-CH₂-) oder eine Acetoxyisopropylgruppe (CH₃-CO-O-CH(CH₃)-CH₂-), oder R⁵ und R⁶ bilden zusammen einen Ring, von dem der Stickstoff ein Teil ist, um einen Morpholin- oder Imidazolinring aufzubauen.

Weiterhin stehen die Substituenten R⁸ und R⁹ je unabhängig voneinander für eine C₁- bis C₂₀-Alkylgruppe, -Cycloalkylgruppe, -Alkylarygruppe, -Arylgruppe oder für eine Hydroxyalkylgruppe.

Die Abfolge der in Formel (I) als s1, s2, s3 und s4 bezeichneten Teilstrukturelemente kann hierbei alternierend, blockartig oder zufällig angeordnet sein.

Schliesslich stellen die Indizes a, b, c und d Molverhältnisse der Struktureinheiten s1, s2, s3 und s4 dar. Diese Strukturelemente stehen in einem Verhältnis von
a/b/c/d = (0.1 - 0.9) / (0.1 - 0.9) / (0 - 0.8) / (0 - 0.3),
insbesondere a/b/c/d = (0.1 - 0.9) / (0.1 - 0.9) / (0 - 0.5) / (0 - 0.1),
bevorzugt a/b/c/d = (0.1 - 0.9) / (0.1 - 0.9) / (0 - 0.3) / (0 - 0.06),
zueinander, mit der Massgabe, dass a + b + c + d = 1 ist. Die Summe c + d ist bevorzugt grösser als 0.

Die Herstellung des Kammpolymeren **KP** der Formel (I) kann einerseits durch radikalische Polymerisation der entsprechenden Monomere der Formel (IIIₐ), (III_{b}), (III_{c}) bzw. (III_{d}), welche dann zu den Strukturelementen Struktureinheiten s1, s2, s3 und s4 führen, 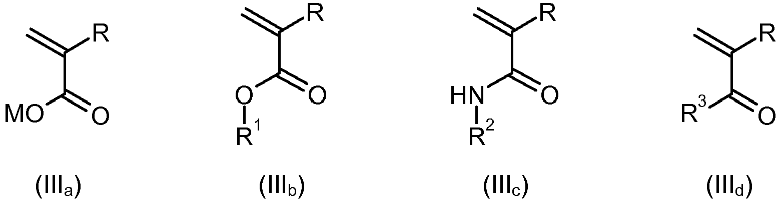 oder andererseits durch eine sogenannte polymer-analoge Umsetzung einer Polycarbonsäure der Formel (IV) erfolgen

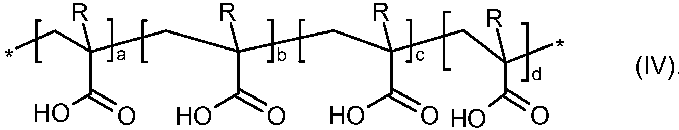

In der polymer-analogen Umsetzung wird die Polycarbonsäure der Formel (IV) mit den korrespondierenden Alkoholen, Aminen verestert oder amidiert und dann allenfalls neutralisiert oder teilneutralisiert (je nach Art des Rest M z.B. mit Metallhydroxiden oder Ammoniak). Details zur polymer-analogen Umsetzung sind offenbart beispielsweise in EP 1 138 697 B1 auf Seite 7 Zeile 20 bis Seite 8 Zeile 50, sowie in dessen Beispielen oder in EP 1 061 089 B1 auf Seite 4, Zeile 54 bis Seite 5 Zeile 38 sowie in dessen den Beispielen. In einer Abart davon, wie sie in EP 1 348 729 A1 auf Seite 3 bis Seite 5 sowie in dessen Beispielen beschrieben sind, kann das Kammpolymer **KP** der Formel (I) in festem Aggregatszustand hergestellt werden. Die Offenbarung dieser gerade genannten Patentschriften wird hiermit insbesondere durch Bezugnahme eingeschlossen.

Es hat sich erwiesen, dass eine besonders bevorzugte Ausführungsform der Kammpolymere **KP** der Formel (I) diejenigen sind, in welchen c+d > 0, insbesondere d > 0, sind. Als Rest R³ hat sich insbesondere -NH-CH₂-CH₂-OH als besonderes vorteilhaft erwiesen.

Als besonders vorteilhaft erwiesen haben sich Kammpolymere **KP**, wie sie von Sika Schweiz AG unter der Handelsnamenreihe ViscoCrete® kommerziell vertrieben werden.

Es ist weiter vorteilhaft, wenn die Zusammensetzung zusätzlich mindestens ein Tensid aufweist.

Unter dem Begriff "Tensid" werden im vorliegenden Dokument Substanzen verstanden, welche die Oberflächenspannung herabsetzen.

Tenside werden typischerweise nach Art und Ladung des hydrophilen Molekülanteils klassifiziert. Hierbei können vier Gruppen unterschieden werden; Aniontenside, Kationtenside, nichtionische Tenside und Amphotenside.

Anionische Tenside weisen typischerweise eine oder mehrere funktionelle anionenaktive Gruppen auf, die in wässriger Lösung unter Bildung von Anionen dissoziieren, welche letztlich für die grenzflächenaktiven Eigenschaften verantwortlich sind. Beispiele für typische anionische Gruppen sind: -COONa, -SO₃Na, -OSO₃Na, welche die Seifen und Alkylarensulfonate (z.B. Dodecylbenzolsulfonat) sowie die Alkansulfonate, α-Olefinsulfonate und Alkylsulfate zu den wichtigsten anionischen Tensiden machen.

Geeignete anionische Tenside sind ausgewählt aus der Gruppe bestehend aus Fettalkoholsulfate, beispielsweise Laurylsulfate oder Laurylmyristylsulfate; Ethersulfate; Olefin-/Paraffinsulfonate; Alkylsulfonate; Alkylbenzolsulfonate; Sulfosuccinate, beispielsweise Dioctylsulfosuccinate, Dilaurethsulfosuccinat oder C12-C14-Alcoholpolyglycolethersulfosuccinat; und Phosphorsäureester.

Kationtenside sind beinahe ausschliesslich durch das Vorhandensein einer quartären Ammonium-Gruppe gekennzeichnet. Besondere Bedeutung haben Kationtenside, bei denen die Stickstoff-Gruppe mit zwei langen und zwei kurzen Alkyl-Resten substituiert ist, z.B. Dimethyldistearyl-ammoniumchlorid.

Nichtionische Tenside werden in der Regel der Ethoxylierung von Verbindungen mit aktiven Wasserstoff-Atomen hergestellt, unter welchen Anlagerungsprodukte von Ethylenoxid an Fettalkohole oder Oxoalkohole die größte Bedeutung besitzen. Weiter gebräuchlich sind Ethoxylate der Alkylphenole, die Alkylphenolpolyglykolether, Blockpolymere des Ethylen- und Propylenoxids (EO/PO-Blockpolymere) und Alkylglykoside.

Geeignete nichtionische Tenside sind ausgewählt aus der Gruppe bestehend aus Alkohol-Ethoxylate, wie sie beispielsweise unter dem Handelsnamen Berol® 260 oder Berol® 840 erhältlich sind; Polyalkylenglykolether, auch Fettalkoholethoxylate genannt, wie Polyoxyethylenstearylether, Polyoxyethylenlaurylether oder Polyoxyethylencetylether, welche teilweise unter dem Handelsnamen Brij®, Genapol® oder Lutensol® erhältlich sind; Fettalkoholpropoxylate; EO/PO-Blockpolymere wie Jeffox® WL-600; Polypropylenglykole, wie beispielsweise die Vertreter der Pluriol® P Marken; Polyethylenglykole; Alkylglucoside, wie beispielsweise Tween® 20; Alkylpolyglycoside; Oktylphenolethoxylate, wie beispielsweise Triton X-100; und Nonylphenolethoxylate, wie beispielsweise Nonoxinol-9.

Bevorzugte nichtionische Tenside sind nichtionische Tenside ausgewählt aus der Gruppe bestehend aus Fettalkoholethoxylate und EO/PO-Blockpolymere.

Es ist insbesondere vorteilhaft, wenn es sich bei dem mindestens einen Tensid um ein nichtionisches Tensid handelt

Es ist weiter vorteilhaft, wenn es sich bei dem mindestens einen Tensid um ein schaumarmes Tensid mit hoher Netzwirkung handelt.

Die Zusammensetzung kann weitere Bestandteile enthalten. Vorzugsweise kann die Zusammensetzung weiter Zuschlagstoffe, insbesondere Basalt, enthalten, typischerweise 5 - 50 Gew.-%, bezogen auf das Gesamtgewicht der Zusammensetzung. Beispiele für weitere Bestandteile sind Lösungsmittel oder Additive, wie sie in der Kalksandsteintechnologie geläufig sind, insbesondere Konservierungsmittel, Stabilisatoren gegen Hitze und Licht, Farbstoffe und Entschäumer.

Bei einer bevorzugten Zusammensetzung beträgt:
der Anteil an Sand 60 - 96.5, insbesondere 80 - 94, Gewichts-%;
der Anteil an Kalk 3 - 15, insbesondere 4 - 10, Gewichts-%;
der Anteil an Wasser 0.485 - 25, insbesondere 1 - 15, bevorzugt 1 - 10 Gewichts-%;
der Anteil an Fliessmittel 0.015 - 0.5, bevorzugt 0.018 - 0.2, Gewichts-%;
sowie, falls vorhanden, der Anteil an Tensid 0.00003 - 0.1,
insbesondere 0.0003 - 0.015, bevorzugt 0.0003 - 0.009 Gewichts-%; bezogen auf das Gesamtgewicht der Zusammensetzung.

In einem weiteren Aspekt betrifft die vorliegende Erfindung ein Verfahren zur Herstellung von Kalksandstein umfassend die Schritte:
i) Bereitstellen einer Zusammensetzung, wie sie im Dokument vorhergehend als geeignete und bevorzugte Zusammensetzung erwähnt wurde;
ii) Zuführen der Zusammensetzung mindestens einer Pressvorrichtung und verpressen;
iii) Aushärten der Zusammensetzung.

Die Bereitstellung der Zusammensetzung in Schritt i) erfolgt typischerweise durch Vermischen von Sand, CaO, Wasser, Fliessmittel und, falls vorhanden, Tensid.

Vorzugsweise erfolgt das Vermischen der Komponenten in einem Horizontalmischer, danach wird Mischung, typischerweise in einem Vorratsbehälter, kurzzeitig gelagert, bis die Umwandlung von CaO in Ca(OH)₂ grösstenteils abgeschlossen ist. Die so erhaltene Zusammensetzung kann danach der Verpressung zugeführt werden.

Vorzugsweise wird in Schritt i) wird eine rieselfähige Masse erhalten, in der Sand, Kalk, Wasser, Fliessmittel und, falls vorhanden, Tensid gleichmäßig verteilt vorliegen.

Zum Verpressen in Schritt ii) kann eine übliche, zum Verdichten und/oder zur Formgebung geeignete Vorrichtung eingesetzt werden, typischerweise hydraulische Pressen.

Der angewandte Pressdruck liegt vorzugsweise in einem Bereich von 10 - 25 N/mm², besonders bevorzugt 15 - 20 N/mm².

Die Zusammensetzungen können gewünschtenfalls zu Formkörpern verschiedenster geometrischer Formen, insbesondere Steinen, Ziegeln, L-förmigen Deckenrandsteinen zur Deckenrandschalung, U-förmigen Schalsteinen oder sogenannten Hohllochziegeln, etc. verarbeitet werden. Typischerweise handelt es sich weiter um eines der gängigen Formate von 1 DF bis 20 DF nach DIN V 106. Vorzugsweise werden Formkörper mit einer Abmessung im Bereich von 5 bis 50 cm (Länge) x 5 bis 50 cm (Breite) x 5 bis 100 cm (Höhe) hergestellt.

Vorzugsweise führt der Schritt ii) zu Formkörpern, welche sofort nach dem Schritt ii) transportierbar und/oder stapelbar sind, ohne ihre Form zu verlieren oder wieder zu zerfallen.

Das Aushärten in Schritt iii) erfolgt vorzugsweise als hydrothermische Behandlung bei einer Temperatur von 160 - 220 °C, insbesondere 180 - 200 °C, unter Sattdampfdruck. Die Aushärtung dauert typischerweise 4 - 12, insbesondere 7 - 9 Stunden.

Unter dem Begriff "Sattdampfdruck" wird im ganzen vorliegenden Text der Druck der dampfförmigen Phase des Wassers in einem geschlossenen System verstanden, bei dem sich die flüssigförmige und dampfförmige Phase des Wassers im Gleichgewicht befinden. Der Sattdampfdruck bei der Aushärtung beträgt typischerweise 10 - 16 bar. Vorzugsweise führt der Schritt iii) zu Formkörpern mit einer Druckfestigkeit gemäss DIN V 106 von 12.5 - 35 N/mm².

Typischerweise erfolgt das Verfahren in der folgenden zeitlichen Abfolge; Schritt i), gefolgt von Schritt ii), gefolgt von Schritt iii).

Eine geeignete Ausführungsform ist ein Verfahren, bei dem man:
- die bereitgestellten Komponenten der Zusammensetzung jeweils über wenigstens eine Dosiervorrichtung einer Mischvorrichtung zuführt und vermischt,
- die vermischten Komponenten wenigstens einer Pressvorrichtung zuführt und verpresst.
- die verpresste Zusammensetzung bei einer Temperatur von 160 - 220 °C unter Sattdampfdruck aushärtet.

Durch das erfindungsgemäße Verfahren ist man nun in der Lage, den Energie- und Zeitaufwand sowie den Verschleiss der Presswerkzeuge drastisch zu reduzieren und die Produktqualität der resultierenden Kalksandsteine, namentlich die Prüfrohdichte und die Druckfestigkeit, zu verbessern.

In einem weiteren Aspekt betrifft die vorliegende Erfindung eine verfestigte Zusammensetzung, insbesondere ein Formkörper, die durch das zuvor beschriebene Verfahren erhältlich ist. Ferner betrifft die vorliegende Erfindung in einem weiteren Aspekt eine Verwendung einer Zusammensetzung, wie sie vorgehend beschrieben wurde, zur Herstellung von Kalksandsteinen.

### Beispiele

**Verwendete Additive**

| |
|---|
| **PCE 1**, ViscoCrete® Polymer PC-2, Kammpolymer, Sika Schweiz AG, Schweiz |
| **PCE 2**, ViscoCrete® Polymer RMC-2, Kammpolymer, Sika Schweiz AG, Schweiz |
| **PCE 3**, Cemerol R-750 MC, Kammpolymer, Sika Schweiz AG, Schweiz |
| **NT1**, C12-C16 Alkylalkoholethoxylat, nichtionisches Tensid |
| **NT2**, Polyoxyalkylenalkylether-Fettsäureester, nichtionisches Tensid |
| **AT**, Mischung aus Sulfosuccinat und Fettalkoholsulfonat, anionisches Tensid |
| **TBP**, Tributylphosphat, Entschäumer, Sigma-Aldrich Chemie GmbH, Schweiz |

**Tabelle 1: Inhalt Zusatzmittel (ZM)**

| **Additive** | **ZM1** | **ZM2** | **ZM3** | **ZM4** | **ZM5** | **ZM6** |
|---|---|---|---|---|---|---|
| Fliessmittel: | | | | | | |
| **PCE 1** | | | 60.00 | | | 15.00 |
| **PCE 2** | | | | 60.00 | | |
| **PCE 3** | | | | | 83.30 | |

| Tensid: | | | | | | |
|---|---|---|---|---|---|---|
| **AT** | | 29.00 | | | | |
| **NT1** | 10.00 | | | | | 2.50 |
| **NT2** | | | | | 0.20 | |
| Entschäumer | 0.16 | | 0.50 | 0.50 | | 0.04 |
| Konservierungsmittel | 0.50 | 0.20 | 0.20 | 0.20 | 0.20 | 0.20 |
| Wasser | 89.34 | 70.80 | 39.30 | 39.30 | 16.30 | 82.26 |

Zur Bereitstellung der Vergleichsbeispiele V1 bis V6 und der erfindungsgemässen Zusammensetzungen Z1 bis Z8 wurden Sand (und gegebenenfalls Basalt als Schwerzuschlag) und Ca(OH)₂ für 60 Sekunden in einem Hobart-Mischer trocken gemischt. Innerhalb von 15 Sekunden wurde das Anmachwasser dem Sand/Ca(OH)₂-Gemisch zugegeben und 120 Sekunden gemischt. Im Falle der Zugabe von Zusatzmittel (**ZM**) wurde das Zusatzmittel, vor Zugabe des Anmachwassers zum Sand/Ca(OH)₂-Gemisch, für 120 Sekunden mit dem Anmachwasser vermischt. Danach wurde die Mischung der Verpressung zugeführt.

Aufgrund der einfacheren und schnelleren Handhabe bei der Durchführung der Beispiele wurde auf die Umwandlung von CaO in Ca(OH)₂ durch die direkte Verwendung von Ca(OH)₂ anstelle von CaO verzichtet.

### Beispiel 1

Zur Herstellung der Vergleichsbeispiele V1 bis V3 und der erfindungsgemässen Zusammensetzungen Z1 bis Z5 wurden 53.5 Gew.-% Sand, 35.9 Gew.-% Basalt, 9.4 Gew.-% Ca(OH)₂ und 1.2 Gew.-% Wasser, bezogen auf das Gesamtgewicht der hergestellten erfindungsgemässen Zusammensetzungen, respektive Vergleichsbeispiele, verwendet. Der eingesetzte Basalt hatte eine maximale Korngrösse von 2 mm. Im Falle der Zugabe von Zusatzmittel (siehe Tabelle 2) zur Gesamtdosierung wurden die entsprechenden Gew.-% an Zusatzmittel dem Sand abgezogen. So wurden im Falle von 0.3 Gew.-% eingesetztem Zusatzmittel 53.2 Gew.-% anstelle von 53.5 Gew.-% Sand eingesetzt. Das Mischen von Sand, Ca(OH)₂, Wasser sowie die Zugabe der Zusatzmittel wurde wie vorhergehend beschrieben vorgenommen.

Die Verpressung erfolge mit Hilfe einer mechanischen Presse, womit Probenkörper mit 24 cm (Länge) x 11.5 cm (Breite) x 6 cm (Höhe) aus den Mischungen der erfindungsgemässen Zusammensetzungen, respektive Vergleichsbeispielen, verdichtet wurden. Danach wurden die Probenkörper in einem Autoklaven unter Sattdampfdruck gehärtet. Darauf wurden die Probenkörper bei 105°C getrocknet und die Prüfrohdichte (PRD in kg/dm³) errechnet sowie die Druckfestigkeit (DF in N/mm²) von jeweils 2 ½ aufeinandergelegten Probenkörpern bestimmt.

In Tabelle 2 ist ersichtlich, dass die erfindungsgemässen Zusammensetzungen bei gleicher Prüfrohdichte im Vergleich zu den Vergleichsbeispielen eine erheblich höhere Druckfestigkeit erreichen, was ferner auf eine wesentlich bessere und gleichmässigere Verdichtbarkeit hinweist.

**Tabelle 2: Druckfestigkeit (DF) und Prüfrohdichte (PRD) der Vergleichsbeispiele V1 bis V3 und der erfindungsgemässen Zusammensetzungen Z1 bis Z5.**

| | ZM (Gew.-%) | DF N/mm² | PRD (kg/dm³) |
|---|---|---|---|
| V1 | - | 37.8 | 2.1 |
| V2 | ZM1 (0.3) | 34.2 | 2.1 |
| V3 | ZM2 (0.3) | 37.8 | 2.1 |
| Z1 | ZM3 (0.1) | 38.1 | 2.1 |
| Z2 | ZM4 (0.1) | 38.6 | 2.1 |
| Z3 | ZM4 (0.2) | 45.0 | 2.1 |
| Z4 | ZM5 (0.1) | 40.5 | 2.1 |
| Z5 | ZM6 (0.3) | 45.0 | 2.1 |

### Beispiel 2

Zur Herstellung der Vergleichsbeispiele V4 bis V6 und der erfindungsgemässen Zusammensetzungen Z6 bis Z8 wurden Sand, Ca(OH)₂, Wasser und gegebenenfalls Zusatzmittel in den in Tabelle 3 angegebenen Mengen in Gew.-%, bezogen auf das Gesamtgewicht der hergestellten erfindungsgemässen Zusammensetzungen, respektive Vergleichsbeispiele, verwendet. Der Sand bestand zu 20 Gew.-% aus Natursand mit einer Maximalkorngrösse von 1 mm, zu 40.5 Gew.-% aus Natursand mit einer Maximalkorngrösse von 3 mm und 39.5 Gew.-% aus Brechsand mit einer Maximalkorngrösse von 2 mm, bezogen auf das Gesamtgewicht des eingesetzten Sandes. Das Mischen von Sand, Ca(OH)₂, Wasser sowie die Zugabe der Zusatzmittel wurde wie vorhergehend beschrieben vorgenommen.

**Tabelle 3: Inhalt der Vergleichsbeispiele V4 bis V6 und der erfindungsgemässen Zusammensetzungen Z6 bis Z8.**

| | V4 | Z6 | V5 | Z7 | V6 | Z8 |
|---|---|---|---|---|---|---|
| Sand (Gew.-%) | 90.9 | 90.6 | 91.7 | 91.4 | 90.9 | 90.6 |
| Ca(OH)₂ (Gew.-%) | 7.9 | 7.9 | 7.1 | 7.1 | 7.9 | 7.9 |
| ZM (Gew.-%) | - | 0.3 (ZM6) | - | 0.3 (ZM6) | - | 0.3 (ZM6) |
| Wasser (Gew.-%) | 1.2 | 1.2 | 1.2 | 1.2 | 1.2 | 1.2 |

Die Verpressung erfolge mit Hilfe eines Gyrator-Verdichters (Gyratory Compactor ICT-100R von Invelop Oy, Finnland), womit zylinderförmige Probenkörper aus den Mischungen der erfindungsgemässen Zusammensetzungen, respektive Vergleichsbeispielen, mit einem Durchmesser von 100 mm verdichtet wurden.

Das Mischgut wurde mit einem Rotationswinkel von 40mrad und einem konstanten Druck von 4.5 bar zusammengedrückt und dabei verdichtet. Bei diesem Vorgang wird bei jeder Umdrehung (Zyklus) die Höhe des Probekörpers gemessen.

Dieser Vorgang der Verdichtung kann nach einer bestimmten Anzahl von Rotationen oder bei Erreichen einer bestimmten Probenhöhe gestoppt werden. In letzterem Fall kann durch die zugegebene Masse an Mischgut und der vorgegebenen Höhe eine beliebige Rohdichte eingestellt werden. Im Fall einer bestimmten Anzahl von Rotationen wird die Rohdichte (Rohdichte vor dem Autoklavieren) über die erreichte Probenhöhe errechnet. Je schneller eine Mischung eine vorgegebene Probenhöhe erreicht, desto besser ist ihre Verdichtbarkeit.

Die Probenkörper wurden in einem Autoklaven unter Sattdampfdruck gehärtet. Danach wurden die Probenkörper bei 20°C und bei 65% relativer Feuchtigkeit gelagert und die Druckfestigkeit in Anlehnung an DIN 18501 (ungeschliffen) geprüft bei einer Belastungsgeschwindigkeit von 3.9 kN/s.

Im Fall der Vergleichsbeispiele V4 und V5 und der erfindungsgemässen Zusammensetzungen Z6 und Z7 wurde der Vorgang der Verdichtung bei Erreichen einer festgelegten Probenhöhe gestoppt und die Anzahl der nötigen Rotationen bestimmt, wie in Tabelle 4 gezeigt.

In Tabelle 4 ist ersichtlich, dass die erfindungsgemässen Zusammensetzungen die vorgegebene Rohdichte mit erheblich weniger Zyklen erreichen.

**Tabelle 4: Druckfestigkeit (DF), Rohdichte vor Autoklavieren (RD v.A.) und Prüfrohdichte (PRD) der Vergleichsbeispiele V4 und V5 und der erfindungsgemässen Zusammensetzungen Z6 und Z7.**

| | ZM (Gew.-%) | Ca(OH)₂ (Gew.-%) | RD v.A. (kg/dm³) | PRD (kg/dm³) | Zyklen |
|---|---|---|---|---|---|
| V4 | - | 7.9 | 2.00 | 1.93 | 65 |
| Z6 | ZM6 (0.3) | 7.9 | 2.00 | 1.93 | 27 |
| V5 | - | 7.1 | 2.00 | 1.92 | 57 |
| Z7 | ZM6 (0.3) | 7.1 | 2.00 | 1.93 | 22 |

Im Fall des Vergleichsbeispiels V6 und der erfindungsgemässen Zusammensetzung Z8 wurde der Vorgang der Verdichtung nach einer festgelegten Anzahl von 60 Rotationen gestoppt, wie in Tabelle 5 gezeigt.

Aus Tabelle 5 ist ersichtlich, dass die erfindungsgemässe Zusammensetzung bei gleicher Zyklenzahl gegenüber dem Vergleichsbeispiel eine markant höhere Prüfrohdichte und Druckfestigkeit aufweist.

**Tabelle 5: Druckfestigkeit (DF) und Prüfrohdichte (PRD) des Vergleichsbeispiels V6 und der erfindungsgemässen Zusammensetzung Z8.**

| | ZM (Gew.-%) | Ca(OH)₂ (Gew.-%) | DF (N/mm²) | PRD (kg/dm³) | Zyklen |
|---|---|---|---|---|---|
| V6 | - | 7.9 | 16.8 | 1.89 | 60 |
| Z8 | ZM6 (0.3) | 7.9 | 28.9 | 2.02 | 60 |

## Patentansprüche

1. Zusammensetzung zur Herstellung von Kalksandstein umfassend Kalk, Sand, Wasser und mindestens ein Fliessmittel, wobei es sich bei dem mindestens einen Fliessmittel um ein Kammpolymer **KP** mit über Ester- oder Ethergruppen an die Hauptkette angebunden Seitenketten handelt und wobei der Anteil an Wasser 0.485 - 10 Gewichts-%, bezogen auf das Gesamtgewicht der Zusammensetzung, beträgt.

2. Zusammensetzung nach Anspruch 1, **dadurch gekennzeichnet, dass** das Kammpolymer **KP** ein Copolymer der Formel (I) ist 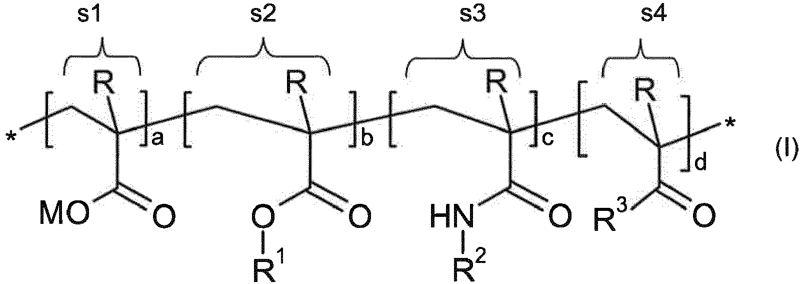 wobei
M unabhängig voneinander für H⁺, Alkalimetallion, Erdalkalimetallion, zwei- oder dreiwertiges Metallion, Ammoniumion oder organische Ammoniumgruppe steht;
R je unabhängig voneinander von den anderen Resten R in Formel (I) für Wasserstoff oder für eine Methylgruppe steht;
R¹ unabhängig voneinander für -[AO]_{q}-R⁴ steht;
R² unabhängig voneinander für eine C₁- bis C₂₀-Alkylgruppe, -Cycloalkylgruppe, -Alkylarylgruppe oder für -[AO]_{q}-R⁴ steht,
wobei A für eine C₂- bis C₄-Alkylengruppe und R⁴ für eine C₁- bis C₂₀-Alkylgruppe, -Cyclohexylgruppe oder -Alkylarylgruppe steht;
und q = 2 - 250;
R³ unabhängig voneinander für -NH₂, -NR⁵R⁶ oder -OR⁷NR⁸R⁹ steht,
wobei R⁵ und R⁶ unabhängig voneinander
für eine C₁- bis C₂₀-Alkylgruppe, -Cycloalkylgruppe oder -Alkylaryl-gruppe oder -Arylgruppe steht;
oder
für eine Hydroxyalkylgruppe steht,
oder für eine Acetoxyethyl- (CH₃-CO-O-CH₂-CH₂-) oder eine Hydroxy-isopropyl- (HO-CH(CH₃)-CH₂-) oder eine Acetoxyisopropylgruppe (CH₃-CO-O-CH(CH₃)-CH₂-) steht,
oder R⁵ und R⁶ zusammen einen Ring bilden, von dem der Stickstoff ein Teil ist, um einen Morpholin- oder Imidazolinring aufbauen;
wobei R⁷ für eine C₂-C₄- Alkylengruppe steht;
und R⁸ und R⁹ je unabhängig voneinander für eine C₁- bis C₂₀-Alkylgruppe, -Cycloalkylgruppe, -Alkylarygruppe, -Arylgruppe oder für eine Hydroxyalkylgruppe steht
und wobei a, b, c und d Molverhältnisse der Struktureinheiten s1, s2, s3 und s4 darstellen
und a/b/c/d = (0.1 - 0.9) / (0.1 - 0.9) / (0 - 0.8) / (0 - 0.3) mit der Massgabe, dass a + b + c + d = 1 ist.

3. Zusammensetzung nach einem der vorhergehenden Ansprüche, **dadurch gekennzeichnet, dass** die Zusammensetzung zusätzlich mindestens ein Tensid aufweist.

4. Zusammensetzung nach Anspruch 3, **dadurch gekennzeichnet, dass** es sich bei dem mindestens einen Tensid um ein nichtionisches Tensid handelt.

5. Zusammensetzung nach einem der vorhergehenden Ansprüche, **dadurch gekennzeichnet, dass**
der Anteil an Sand 60 - 95.5 Gewichts-%;
der Anteil an Kalk 3 - 15 Gewichts-%;
der Anteil an Wasser 0.485 - 10 Gewichts-%;
der Anteil an Fliessmittel 0.015 - 0.5 Gewichts-%;
sowie, falls vorhanden, der Anteil an Tensid 0.00003 - 0.1 Gewichts-%; bezogen auf das Gesamtgewicht der Zusammensetzung, beträgt.

6. Verfahren zur Herstellung von Kalksandstein umfassend die Schritte:
i) Bereitstellen einer Zusammensetzung gemäss einem der vorhergehenden Ansprüche;
ii) Zuführen der Zusammensetzung mindestens einer Pressvorrichtung und verpressen;
iii) Aushärten der Zusammensetzung.

7. Verfahren nach Anspruch 6, **dadurch gekennzeichnet, dass** die Aushärtung bei einer Temperatur von 160 - 220 °C unter Sattdampfdruck stattfindet.

8. Verfestigte Zusammensetzung, erhältlich aus dem Verfahren gemäss einem der Ansprüche 6 oder 7.

9. Verwendung einer Zusammensetzung gemäss einem der Ansprüche 1 bis 5 zur Herstellung von Kalksandsteinen.

## Claims

1. A composition for producing lime sand brick comprising lime, sand, water and at least one plasticizer, wherein the at least one plasticizer is a comb polymer **KP** having side chains bound to the main chain via ester or ether groups and wherein the amount of water is 0.485-10% by weight, based on the total weight of the composition.

2. The composition according to claim 1, **characterized in that** the comb polymer **KP** is a copolymer of the formula (I) 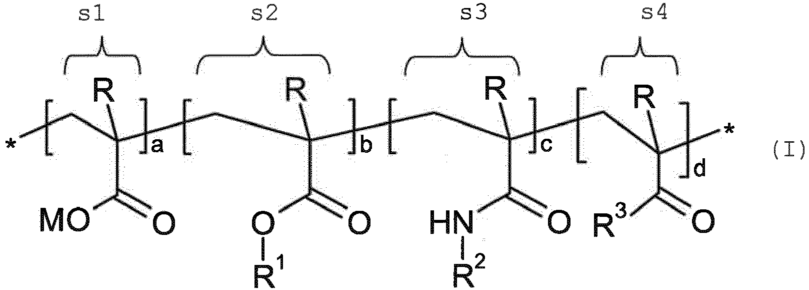 wherein
M independently of each other represent H⁺, an alkali metal ion, an alkaline earth metal ion, a di- or trivalent metal ion, an ammonium ion or an organic ammonium group;
each R independently of the other moieties R in formula (I) represents hydrogen or a methyl group;
R¹ independently of each other represent -[AO]_{q}-R⁴ ;
R² independently of each other represent a C₁ to C₂₀ alkyl group, cycloalkyl group, alkylaryl group or - [AO]_{q}-R⁴,
wherein A represents a C₂ to C₄ alkylene group and R⁴ a C₁ to C₂₀ alkyl group, cyclohexyl group or alkylaryl group;
and q = 2 - 250;
R³ independently of each other represent -NH₂, - NR⁵R⁶ or -OR⁷NR⁸R⁹,
wherein R⁵ and R⁶ independently of each other represent a C₁ to C₂₀ alkyl group, cycloalkyl group or alkylaryl group or aryl group;
or
a hydroxyalkyl group,
or an acetoxyethyl (CH₃-CO-O-CH₂-CH₂-) or a hydroxyisopropyl (HO-CH(CH₃)-CH₂-) or an acetoxyisopropyl group (CH₃-CO-O-CH(CH₃)-CH₂-),
or R⁵ and R⁶ together form a ring wherein the nitrogen is one member forming a morpholine or imidazoline ring;
wherein R⁷ represents a C₂-C₄ alkylene group;
and R⁸ and R⁹ each independently of each other represent a C₁ to C₂₀ alkyl group, cycloalkyl group, alkylaryl group, aryl group or a hydroxyalkyl group
and wherein a, b, c and d are molar ratios of the structural units s1, s2, s3 and s4
and a/b/c/d = (0.1 - 0.9) / (0.1 - 0.9) / (0 - 0.8) / (0 - 0.3) provided that a + b + c + d = 1.

3. The composition according to either one of the preceding claims, **characterized in that** the composition further contains at least one surfactant.

4. The composition according to claim 3, **characterized in that** the at least one surfactant is a nonionic surfactant.

5. The composition according to any preceding claim, **characterized in that**
the amount of sand is 60 - 95.5 % by weight;
the amount of lime is 3 - 15 % by weight;
the amount of water is 0.485 - 10 % by weight;
the amount of plasticizer is 0.015 - 0.5 % by weight;
and, if present, the amount of surfactant is 0.00003 - 0.1 % by weight;
based on the total weight of the composition.

6. A method for producing lime sand brick comprising the steps of:
i) providing a composition according to any one of the preceding claims;
ii) feeding the composition to at least one pressing device and pressing;
iii) hardening the composition.

7. The method of claim 6, **characterized in that** the hardening takes place at a temperature of 160 - 220°C under saturated vapor pressure.

8. A solidified composition obtained by the method according to either one of claims 6 or 7.

9. Use of a composition according to any one of claims 1 to 5 for producing lime sand bricks.

## Revendications

1. Composition pour la fabrication de briques silico-calcaires, comprenant de la chaux, du sable, de l'eau et au moins un fluidifiant, où il s'agit, pour ledit au moins un fluidifiant, d'un polymère en peigne KP présentant des chaînes latérales liées via des groupes ester ou éther à la chaîne principale et la proportion d'eau étant de 0,485-10% en poids, par rapport au poids total de la composition.

2. Composition selon la revendication 1, **caractérisée en ce que** le polymère en peigne KP est un copolymère de formule (I) 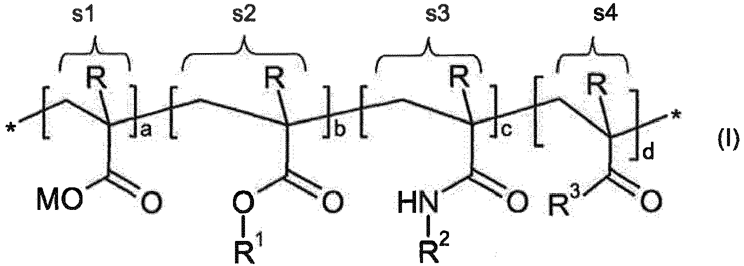 dans laquelle
M représente, indépendamment, H⁺, un ion de métal alcalin, un ion de métal alcalino-terreux, un ion métallique divalent ou trivalent, un ion d'ammonium ou un groupe d'ammonium organique ;
R représente, à chaque fois indépendamment des autres radicaux R dans la formule (I), hydrogène ou un groupe méthyle ;
R¹ représente, indépendamment, - [AO]_{q}-R⁴ ;
R² représente, indépendamment, un groupe C₁-C₂₀-alkyle, C₁-C₂₀-cycloalkyle, C₁-C₂₀-alkylaryle ou -[AO]_{q}-R⁴,
A représentant un groupe C₂-C₄-alkylène et R⁴ représentant un groupe C₁-C₂₀-alkyle, C₁-C₂₀-cyclohexyle ou C₁-C₂₀-alkylaryle ; et q= 2-250 ;
R³ représente, indépendamment, -NH₂, -NR⁵R⁶
ou -OR⁷NR⁸R⁹,
R⁵ à R⁶ représentant, indépendamment,
un groupe C₁-C₂₀-alkyle, C₁-C₂₀-cycloalkyle, C₁-C₂₀-alkylaryle ou C₁-C₂₀-aryle ; ou
un groupe hydroxyalkyle ou
un groupe acétoxyéthyle (CH₃-CO-O-CH₂-CH₂-) ou hydroxyisopropyle (HO-CH(CH₃)-CH₂-) ou acétoxyisopropyle (CH₃-CO-O-CH(CH₃)-CH₂-) ou
R⁵ et R⁶ formant ensemble un cycle, dont l'azote fait partie, pour former un cycle morpholine ou imidazoline ;
R⁷ représentant un groupe C₂-C₄-alkylène ;
et R⁸ et R⁹ représentant, à chaque fois indépendamment, un groupe C₁-C₂₀-alkyle, C₁-C₂₀-cycloalkyle, C₁-C₂₀-alkylaryle, C₁-C₂₀-aryle ou un groupe hydroxyalkyle
et a, b, c et d représentant les rapports molaires des unités structurales s1, s2, s3 et s4
et a/b/c/d = (0, 1-0, 9) / (0, 1-0, 9) / (0-0, 8) / (0-0, 3) à condition que a + b + c + d = 1.

3. Composition selon l'une quelconque des revendications précédentes, **caractérisée en ce que** la composition contient en outre au moins un tensioactif.

4. Composition selon la revendication 3, **caractérisée en ce qu'**il s'agit, pour ledit au moins un agent tensioactif, d'un tensioactif non ionique.

5. Composition selon l'une quelconque des revendications précédentes, **caractérisée en ce que**
la proportion de sable est de 60-95,5% en poids ;
la proportion de chaux est de 3-15% en poids ;
la proportion d'eau est de 0,485-10% en poids ;
la proportion de fluidifiant est de 0,015-0,5% en poids ;
ainsi que, le cas échéant, la proportion de tensioactif est de 0,00003-0,1% en poids ;
par rapport au poids total de la composition.

6. Procédé pour la préparation de briques silico-calcaires, comprenant les étapes de :
i) préparation d'une composition selon l'une quelconque des revendications précédentes ;
ii) introduction de la composition dans au moins un dispositif de pressage et pressage ;
iii) durcissement de la composition.

7. Procédé selon la revendication 6, **caractérisé en ce que** le durcissement a lieu à une température de 160-220°C sous une pression de vapeur saturante.

8. Composition solidifiée, pouvant être obtenue à partir du procédé selon l'une quelconque des revendications 6 ou 7.

9. Utilisation d'une composition selon l'une quelconque des revendications 1 à 5 pour la préparation de briques silico-calcaires.
